# EUROPÄISCHE PATENTSCHRIFT

(11) **EP 0 922 254 B1**
(45) Veröffentlichungstag und Bekanntmachung des Hinweises auf die Patenterteilung: **24.05.2000**
(21) Anmeldenummer: 97937424.6
(22) Anmeldetag: 06.08.1997
(51) Int. Cl.: G06F 11/10

(54) **FEHLERERKENNUNG IN EINEM SPEICHERSYSTEM**
ERROR RECOGNITION IN A STORAGE SYSTEM
RECONNAISSANCE DES ERREURS DANS UN SYSTEME DE MEMOIRE

(30) Priorität: 30.08.1996 DE 19635239
(43) Veröffentlichungstag der Anmeldung: 16.06.1999
(73) Patentinhaber: SIEMENS AKTIENGESELLSCHAFT, 80333 München (DE)
(72) Erfinder: KNEFEL, Hans-Werner, D-82152 Martinsried (DE)
(86) Internationale Anmeldenummer: DE9701657
(87) Internationale Veröffentlichungsnummer: WO9809219

(56) Entgegenhaltungen:
- DE-A- 2 655 653
- US-A- 5 164 944

## Beschreibung

Die Dateninhalte von Speichersystemen werden häufig in der Weise gesichert, daß unter der Adresse eines Datenwortes zusätzlich eine Anzahl redundanter Bits mit abgespeichert wird. Diese Bits werden Kontrollbits, K-Bits, oder ECC-Bits genannt und entstehen durch Bildung der Paritätssumme über bestimmte Teile des Datenwortes, was üblicherweise als EDC-Codierung ( "EDC" abgekürzt für Error Detection Code) bezeichnet wird. Beim Auslesen des Speicherwortes werden die Teilparitäten erneut gebildet und mit den ebenfalls ausgelesenen zugeordneten K-Bits verglichen. Falls für alle K-Bits Gleichheit besteht, schließt man daraus, daß das ausgelesene Datenwort fehlerfrei ist. Bei Ungleichheit wird aus dem Muster der Nichtübereinstimmung, dem sog. Syndrommuster, auf die Art des Fehlers geschlossen.

Diejenigen K-Bit-Positionen, die bei dem genannten Vergleich nicht übereinstimmen, heißen Syndrome. Bestimmte Syndrommuster werden decodiert und es wird so ggf. die verfälschte Bitposition im Datenwort ermittelt und durch Invertieren korrigiert.

Die Bildung der K-Bits (EDC-Codierung), der Vergleich der K-Bits, die Decodierung der Syndrome, sowie die Korrektur und ggf. Alarmierung einer übergeordneten Steuerung erfolgt heute normalerweise mit Hilfe spezieller Controller-Bausteine, die im folgenden auch als EDC-Controller bezeichnet werden.

Aus Dokument US-A-5 164 944 ist ein Speichersystem dieser Art bekannt.

Wenn nun ein Adressierungsfehler vorliegt, so kann dieser Fehler von dem bisher geschilderte Fehlerüberwachungssystem beim Auslesen nicht erkannt werden, da der Adressierungsfehler die Konsistenz des Datenworts gegenüber dem Kontrollwort nicht beeinträchtigt. Um auch Adressierungsfehler zu erkennen, wird deshalb in einer Weiterbildung des Fehlerüberwachungssystem nicht nur das Datenwort sondern auch die Speicheradresse des Datenworts in die EDC-Codierung, d.h. in die Paritätsbildung mit einbezogen.

Durch das Einbeziehen der Adresse in die EDC-Codierung erhöht sich allerdings der Aufwand für das Fehlerüberwachungssystem beträchtlich, da z.B. die doppelte Zahl von EDC-Controllern benötigt wird. Außerdem müßte die EDC-Codierung für Daten und Adresse unterschiedlich sein.

Der Erfindung liegt die Aufgabe zugrunde, die genannten Nachteile zu überwinden.

Diese Aufgabe wird durch die Erfindung gemäß den Merkmalen von Anspruch 1 gelöst.

Es folgt ein Ausführungsbeispiel der Erfindung.

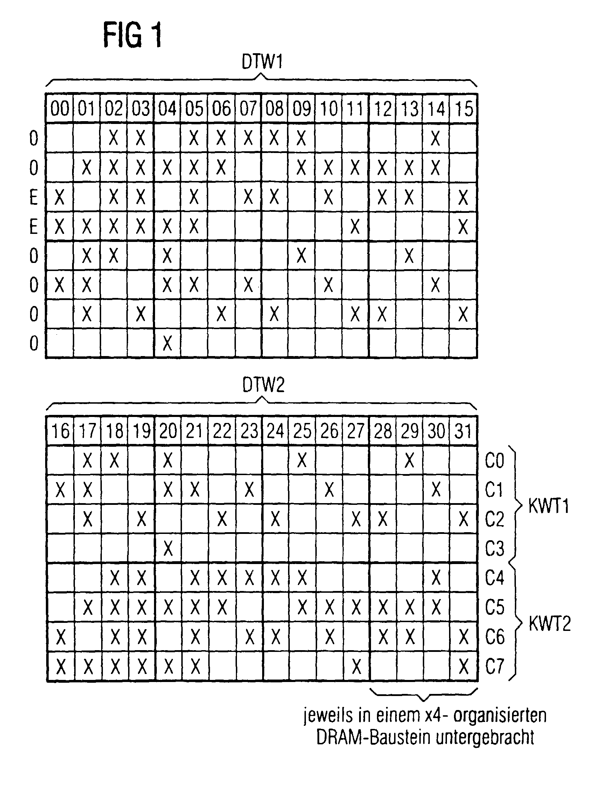

In FIG 1 ist anhand einer sog. EDC-Code-Tabelle dargestellt, über welche Bitpositionen die K-Bits in einem EDC-Controller gebildet werden.

In FIG 1 bedeutet das Zeichen "X", daß das zugeordnete Datenbit N (00 = < N = < 31) in die Paritätsbildung für das Checkbit C (C0 = < C = < C7) einbezogen ist. Das Zeichen "0" neben den Zeilen der unteren Speicherworthälfte bedeutet, daß das zugehörige C-Bit dann gleich 1 ist, wenn die Zahl der Indiparitätsbildung einbezogenen "len" im gesamten Nutzbit-Teil ungerade ist. Das Zeichen "E" neben den Zeilen der unteren Speicherworthälfte bedeutet, daß das zugehörige C-Bit gleich 0 ist, wenn die Zahl der in die Paritätsbildung einbezogenen "len" im gesamten Nutzbit-Teil ungerade ist. Die beiden letztgenannten Aussagen beziehen sich also auf beide Hälften des Speicherwortes zusammen.

In FIG 1 sind Datenwörter vorausgesetzt, die 32 Datenbits umfassen. Zu diesen Datenbits werden acht Controllbits C0, C1, C2....C7 zugeordnet, die jeweils durch Paritätsbildung über bestimmte Bitpositionen eines Datenwortes gebildet werden. Das gesamte Speicherwort, d.h. das Nutzwort (Adresse oder Daten) plus Controllwort, umfaßt also 40 Bits. Diese sind in DRAM-Speicherbausteinen mit einer Zellenbreite von vier Bit organisiert.

Aufgrund der gemäß den EDC-Codetabellen gebildeten Controllbits können ein Ein-Bit-Fehler sicher erkannt werden und führen zu ungeradzahligen Syndrommustern. Desweiteren kann eine Korrektur von Einbitfehlern durchgeführt werden, da jeder Fehler-Bitposition innerhalb eines Nutzwortes ein eindeutiges Syndrommuster fest zugeordnet ist. Dieses Syndrommuster kann decodiert und damit zur Korrektur des fehlerhaften Bits herangezogen werden.

Schließlich können Mehrbitfehler erkannt werden. Doppelbitfehler führen beispielsweise immer zu einem geradzahligen Syndrommuster ungleich 0 und werden daher sicher als Mehrbitfehler erkannt. Die weiteren geradzahligen Mehrbitfehler führen ebenfalls immer zu einem geradzahligen Syndrommustern, wobei mit einer Wahrscheinlichkeit von 1/128 das Nullsyndrom entsteht, da es bei dieser ECC-Breite (Zahl der K-Bits) insgesamt 128 geradzahlige Syndrommuster gibt. Diese Fehler führen daher mit einer Wahrscheinlichkeit von 99.2% sofort zu Mehrbitfehler-Alarm.

Ungeradzahlige Mehrbitfehler führen zu ungeradzahligen Syndrommustern, wobei auch die Syndrommuster von 1 Bit-Fehlern entstehen können. Daher werden diese Fehler mit 68.75% Wahrscheinlichkeit sofort als Mehrbitfehler erkannt. Diese Zahl ist folgendermaßen entstanden:
Es gibt bei 8 Bit ECC-Breite insgesamt 128 ungeradzahlige Syndrommuster. Von diesen 128 Mustern sind 40 für 1 Bit-Fehler reserviert. Es bleiben also 128-40 = 88 Muster für ungeradzahlige Mehrbitfehler übrig. Die Wahrscheinlichkeit, daß eines dieser Muster bei einem beliebigen ungeradzahligen Mehrbitfehler getroffen wird, ist somit 88/128 = 68.75%.

Zusammengefaßt ergibt sich, daß beliebige Mehrbitfehler mit einer Wahrscheinlichkeit von 215/256 = 84% sofort als Mehrbitfehler alarmiert werden. Hierbei sind auch die geradzahligen Mehrbitfehler berücksichtigt worden, die ja in 1 von 128 Fällen das Nullsyndrom verursachen. Diese Zahl ergibt sich wiederum folgenmaßen:
Es gibt bei 8 Bit ECC-Breite insgesamt 256 Syndrommuster. Von diesen 256 Mustern sind 40 für 1 Bit-Fehler reserviert und ein Muster ist das Nullsyndrommuster. Es bleiben also 256 40-1 = 215 Muster für Mehrbitfehler übrig. Die Wahrscheinlichkeit, daß eines dieser Muster bei einem beliebigen Mehrbitfehler getroffen wird, ist somit 215/256 = 84%.

Wenn nun ein Fehler in der Ansteuerung der im Rahmen eines Speicherzugriffs gemeinsam, d.h. parallel angesteuerten Speichereinheiten (z.B. Speicherbausteine) des Speichersystems vorliegt, können also Syndrommuster entstehen, die einen korrigierbaren Einbitfehler vortäuschen und somit nicht als Fehler der Ansteuerung erkannt werden. Auch sind andere Fehler denkbar, z.B. Ausfall des Schreibimpulses, die über die EDC-Controller gar nicht erkennbar wären.

Das genannte Problem kann erheblich verringert werden, wenn die Speicherbausteine, die beim Lesen gemeinsam aktiviert werden, von mehreren Ansteuersignalen der gleichen Art, die von eigenständigen Steuerungseinheiten stammen, versorgt wird. Man rechnet in diesem Fall nur mit einem Ausfall eines dieser Signale (d.h. Ausfall einer Steuerungseinheit), wodurch z.B. Daten und Kontrollbits verschiedener Speicherworte beim Auslesen miteinander vermischt werden können. Trotz dieser Maßnahme, die im folgenden abkürzend als Maßnahme A) bezeichnet wird, können allerdings noch immer, wenn auch mit geringer Wahrscheinlichkeit, Ein-Bit-Fehler oder sogar Fehlerfreiheit vorgetäuscht werden.

Das letztgenannte Problem kann jedoch durch geschickte Aufteilung der Daten und Kontrollbits auf die Speichereinheiten in Verbindung mit der zügehörigen Wahl des EDC-Codes (siehe FIG 1) verhindert werden. Aus Fig.1 erkennt man, daß ein Abschnitt des Kontrollworts, der nicht zusammen mit demjenigen Abschnitt des Datenworts abgespeichert wird, in dem eine Ein-Bit-Verfälschung vorliegt (z.B. der Datenwort-Abschnitt DWT1 mit dem Kontrollwort-Abschnitt KWT1), jeweils nur eine gerade Anzahl zum SynMu beitragen kann. Andererseits kann ein Abschnitts des Datenworts, der zusammmen mit dem Abschnitt des Kontrollworts abgespeichert wird (z.B der Abschnitt DWT1 mit KWT2 ), nur eine ungerade Anzahl zum SynMu beitragen. Der letztere Fall kann aber nicht bei Fehlern stattfinden, die durch die falsche Ansteuerung (Adressierung) einer Speichereinheit entstehen. Somit können bei einer falschen Ansteuerung also nur geradzahlige Syndrommuster entstehen.

Die geschickte Aufteilung der Daten und Kontrollbits auf die Speichereinheiten in Verbindung mit der zugehörigen Wahl des EDC-Codes wird im folgenden abkürzend als Maßnahme B) bezeichnet.

Das allgemeine Bildungsgesetz für die genannte Aufteilung bei mehr als zwei Speichermediumseinheiten ist in der Deutschen Patentanmeldung P 35 28 902.3-31 (SAG-intern GR 84 P 1995) genauer erläutert.

Aufgrund der genannten Aufteilung des Speicherwortes auf die Speichermediumseinheiten und der dazu entsprechenden Wahl des EDC-Codes können also in Fällen, in denen die Daten- und Kontrollbits einer Ansteuerungseinheit falsch ausgewählt werden, nur geradzahlige Syndrommuster entstehen. Da korrigierbare Einbitfehler nur ungeradzahlige Syndrommuster erzeugen, entfällt auf diese Weise die Verwechslungsgefahr der Einbit-Fehler mit den genannten Steuerungsfehlern.

Leider können die Fehler "alles 0" oder "alles 1" in einer Speicherworthälfte (= Hälfte der Daten plus zugehörige Hälfte der C-Bits) trotz der Maßnahme B) immer noch zu ungeradzahligen Syndrommustern führen und somit korrigierbare Einbitfehler vortäuschen.

Um dies zu verhindern, ist der EDC-Code zusätzlich derart gewählt, daß ein Datenwortabschnitt, d.h. ein Abschnitt des Datenworts, der nicht zusammmen mit einem anderen Abschnitt des Datenworts abgespeichert wird (z.B. die Abschnitte DWT1 bzw. DWT2 in Fig 1), an der Bildung eines K-Bits mit jeweils einer geraden Anzahl von Bitstellen beteiligt ist, soweit es sich um einen Datenwortabschnitt handelt, der nicht zusammen mit diesem K-Bit abgespeichert wird, und mit einer ungeraden Anzahl von Bitstellen beteiligt, soweit es sich um einen DatenwortAbschnitt handelt, der zusammen mit diesem K-Bit abgespeichert wird.

Durch die genannte Wahl es EDC-Codes, die im folgenden abkürzend als Maßnahme C) bezeichnet wird, werden also die Fehler 'alles 0' oder 'alles 1' in einer Speicherworthälfte (= Hälfte der Daten + zugehörige Hälfte von ECC-Bits) immer zu geradzahligen Syndrommustern führen. Hierdurch werden diese Fehler als Mehrfachfehler alarmiert. Da die beiden Speichereinheiten der Worthälften durch getrennte Steuerungen angesteuert werden und viele Steuerungsfehler die oben beschriebene Wirkung (alles 0 oder alles 1) haben, wird hierdurch die Unterscheidung dieser Fehler von 1Bit-Fehlern erheblich verbessert.

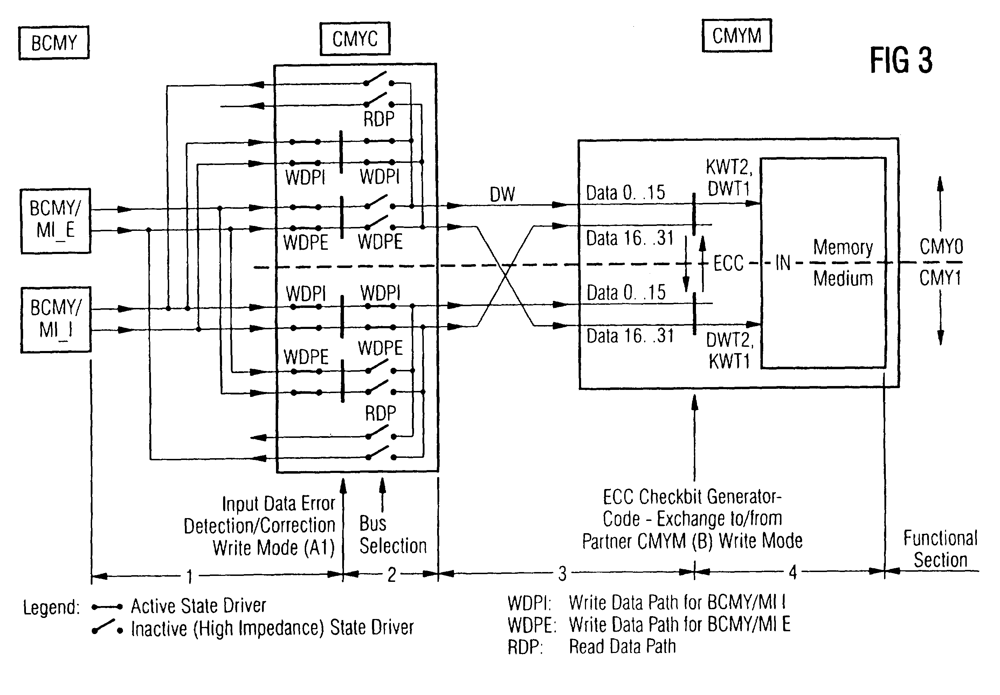

Fig 3 zeigt ein erfindungsgemäßes Speichersystem CMY, das ein gedoppeltes (Speicher-)Steuerungssystem CMYC, ein (Speicher-) Mediumsystem CMYM (kurz "Speicher") mit zwei Speichereinheiten, d.h. zwei (Speicher-)Mediumhälften, sowie eine gedoppelte Busschnittstelle BCMY, über die die Verbindung mit dem Bussystem eines Rechnersystems hergestellt wird.

Das Speichersystem umfaßt eine Fehlerüberwachung, die mit Hilfe von EDC-Controllern in Abhängigkeit des Maschinenzyklusses (Lese- oder Schreibzyklus) unterschiedliche Kontrollpunkte bereitstellt.

Alle Datenwege im CMY, dh. zwischen BCMY und CMYM, sind gedoppelt vorhanden und in jedem Datenweg wird an den Kontrollpunkten von entsprechenden EDC-Controllern zur Fehlerüberwachung unabhängig voneinander die volle Breite der Datenworte(32 Bit) herangezogen..

In Fig 3 ist insbesondere die Konfiguration der Datenwege und Kontrollpunkte des Speichersystems für einen Schreibzyklus dargestellt.

Beim Schreibzyklus gelangen die Schreibdaten und zugehörigen K-Bits vom BCMY kommend zunächst über Schreibpfade WDPI zu einem Kontrollpunkt A1. An diesem Kontrollpunkt wird die bereits genannte Fehlerüberwachung durchgeführt, bei der Bitfehler (Ein- oder Mehrbitfehler) erkannt werden und Einbitfehler sogar korrigiert werden.

Anschließend werden die Schreibdaten gedoppelt (jedoch ohne Kontrollbits) zum Speicher CMYM weitergeleitet.

Am Kontrollpunkt B, d.h. unmittelbar vor dem Einschreiben der Schreibdaten in den Speicher, wird in jeder der beiden Übertragungshälften aus den Schreibdaten nochmals ein Kontrollwort generiert und ein Vergleich ECC der beiden Kontrollwörter durchgeführt. Nur wenn die Daten bis dahin in beiden Hälften fehlerfrei verarbeitet wurden, sind die beiden Kontrollworte identisch, ansonsten kommt es zur Alarmierung eines Mehrfachfehlers, d.h. eines nicht korrigierbaren Fehlers. Durch den Vergleich ECC werden Fehler gefunden, die u.a. auf einer fehlerbehafteten Übertragung zwischen A1 und B beruhen oder durch fehlerbehaftete EDC-Netzwerke an den Kontrollpunkten A1 oder B bedingt sind.

Die Kontrollbits von Kontrollpunkt A1 werden für den Kontrollpunkt B, nicht benötigt, da sie am Kontrollpunkt B, d.h. unmittelbar vor dem Einschreiben der Schreibdaten ins Mediumsystem, aus den Schreibdaten nochmals generiert werden und weil sie zur Fehlerüberwachung zwischen A1 un B nicht benötigt werden. Die Fehlerübrwachung zwischen A1 und B ist ja bereits durch den Vergleich der beiden am Kontrollpunkt B gebildeten Kontrollworts bereits gewährleistet.

Die Übertragungsstrecke der Daten zwischen A1 und B ist teilweise ausgekreuzt. Liegt nun in einer Übertragungshälfte ein Auswahlfehler (Ansteuerungsfehler) vor, so kommt es am Kontrollpunkt B zu Inkonsistenzen. Dies führt zur Alarmierung eines Mehrfachfehlers.

Ergibt der Vergleich am Kontrollpunkt B keine Inkonsistenzen, so werden die Daten samt Kontrollwort in das Mediumsystem eingeschrieben. Insbesondere werden dabei die Datenbits 0...15 (DWT1) zusammen mit den K-Bits 4...7 (KWT2) in die eine Mediumhälfte eingeschrieben und die Datenbits 16...32 (DWT2) zusammen mit den K-Bits 0...3 (KWT1) in die andere Mediumhälfte.

Durch die erläuterte abschnittsweise Überwachung der Datenwege auf Steuerungsfehler iVm. mit dem Austausch der Speicherworthälften zwischen beiden Steuerungen läßt sich aus der kombinierten Betrachtung der Alarme verschiedener EDC-Bausteine der Ort herleiten, an dem der Fehler entstanden ist.

Um einen evtl fehlerhaften Schreibvorgang zu verhindern, der im Abschnitt 4, d.h. direkt beim Einschreiben erfolgt, wird anstatt eines reinen Schreibzyklusses ein Lese-/Schreibzyklus durchgeführt, wobei ein EDC-Check der Lesedaten und damit ein Check der Ansteuerung einer Speicherzelle erfolgt, bevor eine korrekt ansteuerbare Speicherzelle durch die Fehlansteuerung eines fehlerhaften Schreibvorgangs überschrieben wird. Der Lesevorgang bleibt dabei intern, d.h. die BCMY nimmt die Lesedaten nicht auf, um sie auf den Bus auszugeben. Die Schreibdaten werden bis zum Abschluß des Lesechecks in der CMYM zwischengespeichert. Aufgrund dieser Maßnahme werden die Systemauswirkungen von Steuerungsfehlern gering gehalten, sowie die (Steuerungs-)Fehler besser unterschieden und schneller erkannt.

Speziell bewirkt diese Maßnahme, kombiniert mit den genannten Maßnahmen A) und B), daß Fehler in der Auswahl einer Speicherworthälfte (z. B. bedingt durch Adressierungsfehler) schon vor dem Auslesen des verfälschten Speicherwortes als Mehrbitfehler erkannt werden. Kombiniert mit Maßnahme C) gilt dies ebenfalls für die Adressierungsfehler von ganzen Speicherworten. Der gleiche Vorteil gilt bei Mehrbit-Verfälschungen, die durch Fehler innerhalb eines Speicherbausteins bewirkt werden.

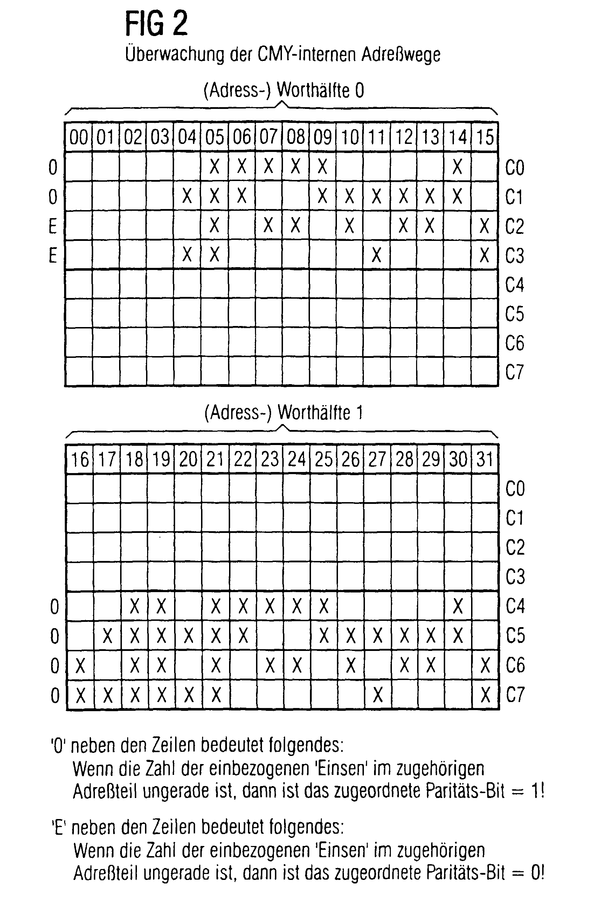

Aus Gründen der Klarheit wurde bisher die Anwendung der EDC-Codierung nur bezüglich des Datenworts erläutert. Tatsächlich wird jedoch nicht nur das Datenwort sondern auch die Speicheradresse des Datenworts in die EDC-Codierung, d.h. in die Paritätsbildung mit einbezogen (siehe FIG 2). Der EDC-Code ist dabei bezüglich des Adressenwortes derart gewählt, daß bei einem Ein-Bit-Fehler im Adressenwort nur ein geradzahliges Syndrom-Muster entstehen kann. Das bedeutet aber, daß einem Mehrfach-Bit-Fehler ebenfalls nur ein geradzahliges Syndrom-Muster entstehen kann. Es kommt somit bei einem Adressierungsfehler immer zur Alarmierung eines Mehrfachfehlers, d.h. eines unkorrigierbaren Fehlers. Das Einbeziehen der Adresse in die EDC-Codierung ist in der Offenlegungsschrift DE 3319710 A1 (SAG-intern 83 P 1382 DE) näher erläutert und wird im folgenden abkürzend als Maßnahme C) bezeichnet.

Um den Aufwand der für die Maßnahme C) notwendigen Generierung der Adreß-Paritätsbits zu minimieren, erfolgt eine zusätzliche Nutzung der Daten-EDC-Bausteine zur Generierung der Adreß-Paritätsbits. Dies wird möglich durch Zeitmultiplex von Adresse und Daten sowie Bildung der Adreß-Paritätsbits gemäß FIG 2, d.h. aus einer Teilmenge der EDC-Codierung von FIG 1. Hierdurch ist die für Maßnahme C) notwendige Bedingung der Geradzahligkeit pro Adreßbit eingehalten. Es wird hierfür die für Maßnahme B) notwendige Bedingung der Geradzahligkeit bestimmter Codeabschnitte genutzt.

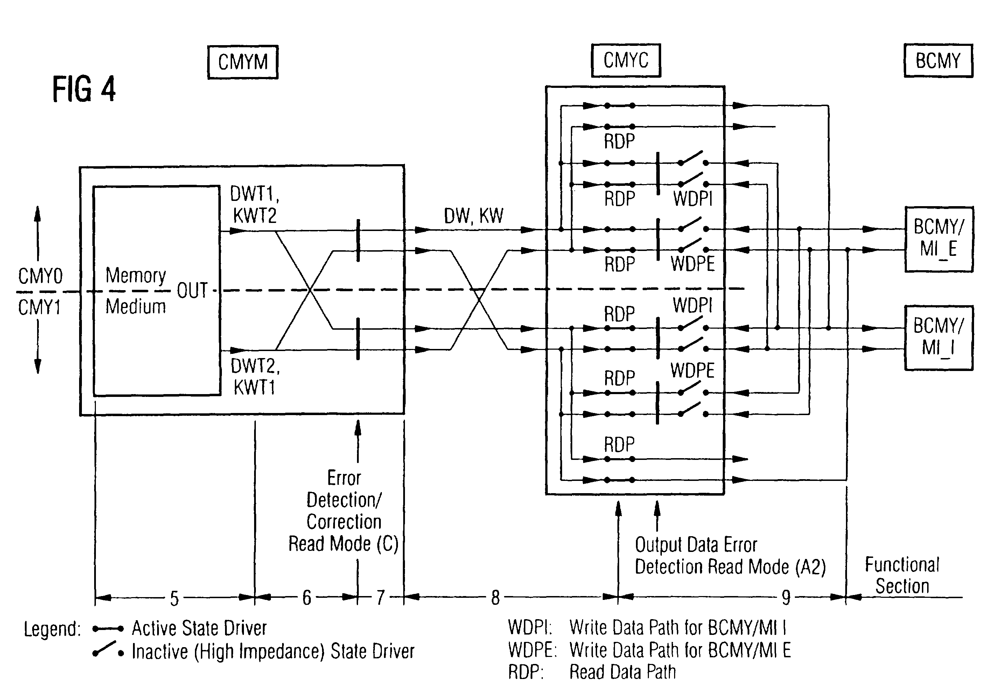

FIG 4 zeigt die Konfiguration der Datenwege und Kontrollpunkte des Speichersystems für einen Lesezyklus. Während des Lesezyklusses wird das Datenwort und das zugehörige Kontrollwort zunächst ausgelesen und gelangt zum Kontrollpunkt C, an dem eine Fehlererkennung und gegebenenfalls Fehlerkorrektur durchgeführt wird. Anschließend wird das Datenwort und das Kontrollwort zu der Busschnittstelle BCMY weitergeleitet, wobei am Kontrollpunkt A2 nochmals eine Fehlererkennung durchgeführt wird. Diese Fehlererkennung bewirkt im Fehlerfall, daß die Busschnittstelle BCMY die Weitergabe des Datenworts und des Kontrollworts auf den Bus blockiert. Außerdem wird in diesem Fall die defekte Speichersystemhälfte (CMY0 oder CMY1) von der Busschnittstelle BCMY weggeschaltet.

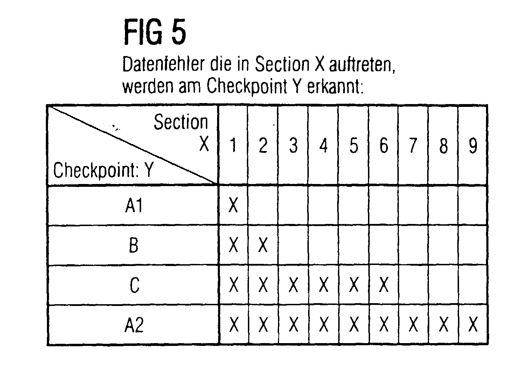

FIG 5 zeigt iVm FIG 3 und 4, an welchem Kontrollpunkt (Checkpoint Y) Datenfehler erkannt werden, die in einem bestimmten Abschnitt (Section X) des Speichersystems auftreten.

Es folgen nunmehr Beispiele für spezielle Fehler und deren Bearbeitung durch das Fehlerüberwachungssystem.

### Beispiel 1: Erkennung von Steuerungsfehlern mit der EDC-Sicherung

### Fehlerfall: Falsche Auswahl einer Speicherworthälfte Mittel zur Erkennung: Maßnahme A) und B)

Zuordnung der Bitpositionen:
X = Von Control 0 angesteuert, Y = Von Control 1 angesteuert
**fett** = fehlerhafter Informationsteil 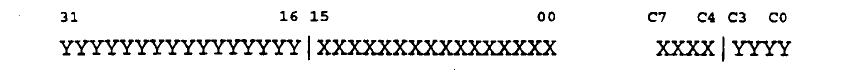
konsistentes Speicherwort unter Adresse 1: 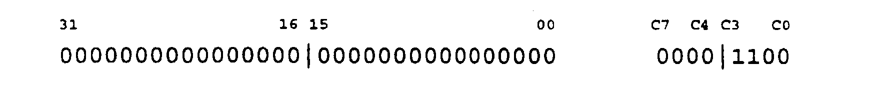 konsistentes Speicherwort unter Adresse 2:

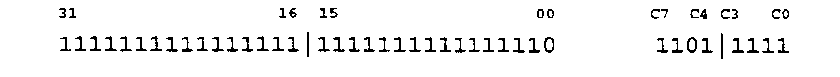

Von Control 0 wurde beim Lesen unter Adresse 2 fälschlicherweise unter Adresse 1 ausgelesen. Das führt zu folgender Leseinformation:

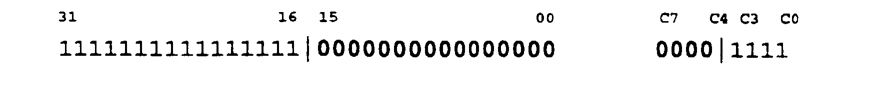

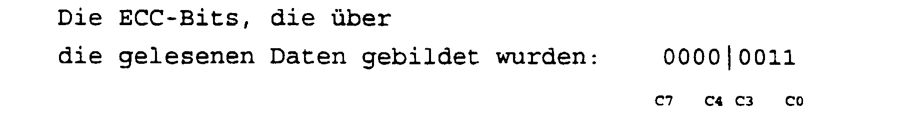

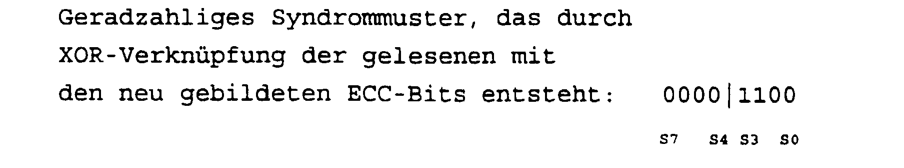

Es führt zur Alarmierung eines Mehrfachfehlers!

### Beispiel 2: Erkennung von Steuerungsfehlern mit der EDC-Sicherung

### Fehlerfall: eine Speicherworthälfte bleibt hochohmig Mittel zur Erkennung: Maßnahme 1)

Zuordnung der Bitpositionen:
X = Von Control 0 angesteuert, Y = Von Control 1 angesteuert
**fett** = fehlerhafter Informationsteil 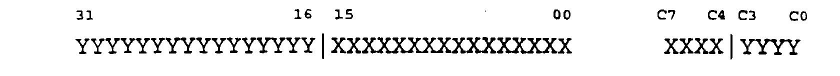
konsistentes Speicherwort unter Adresse 1:

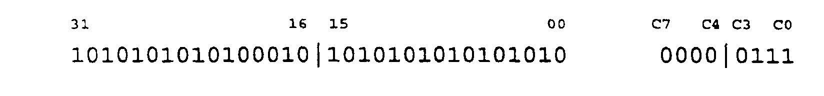

Von Control 1 wurden beim Lesen unter Adresse 1 fälschlicherweise die zugehörigen Daten- und ECC-Ausgänge nicht niederohmig geschaltet. Das führt zu folgender Leseinformation:

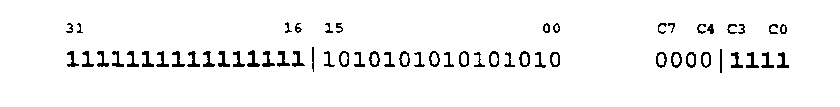

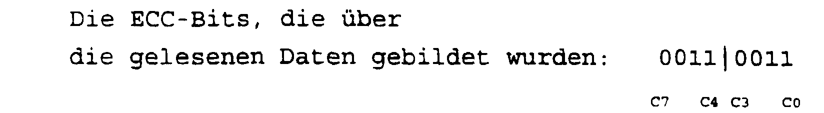

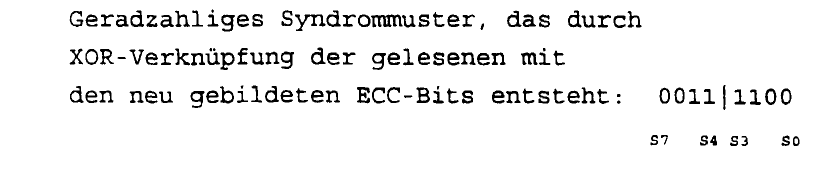

Es führt zur Alarmierung eines Mehrfachfehlers!

### Beispiel 3: Erkennung von Speicherwort-Adressierungsfehlern

- Fehlerfall:: Adressierungsfehler (Einfachfehler) auf Speicherzelle mit gleichem Dateninhalt
- Mittel zur Erkennung:: Maßnahme C), d.h. die physikalische Adresse wurde in die Bildung der ECC-Bits mit einbezogen (siehe Fig. 2)

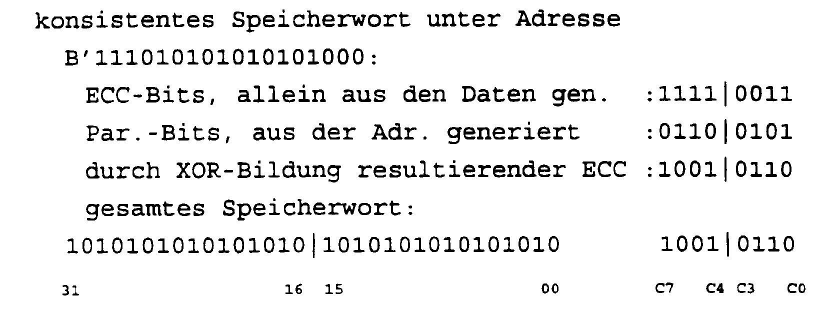

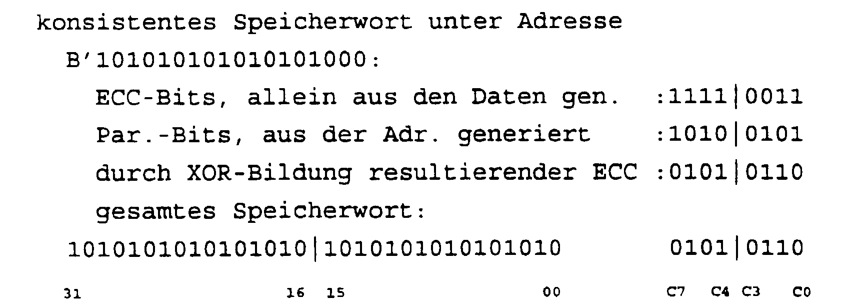

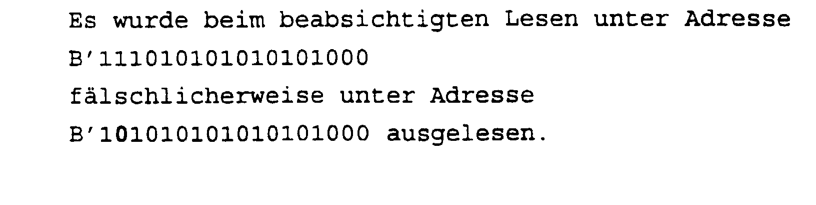

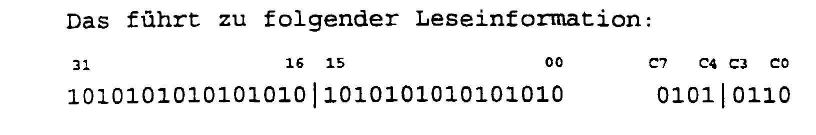

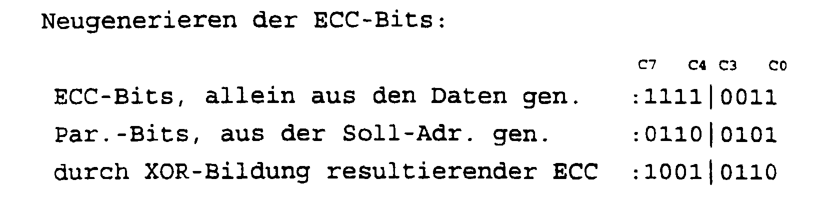

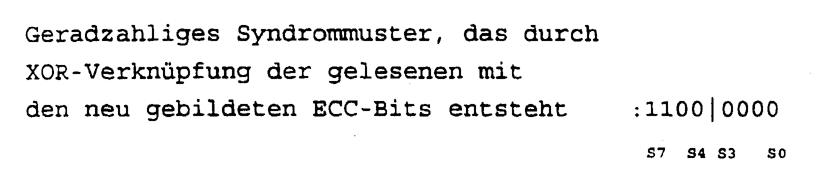

Es führt zur Alarmierung eines Mehrfachfehlers!

### Beispiel 4: Erkennung von Speicherwort-Adressierungsfehlern

- Fehlerfall:: Adressierungsfehler (Mehrfachfehler) auf Speicherzelle mit unterschiedlichem Dateninhalt
- Mittel zur Erkennung:: Maßnahme C), d.h. die physikalische Adresse wurde in die Bildung der ECC-Bits mit einbezogen (siehe Fig. 2)

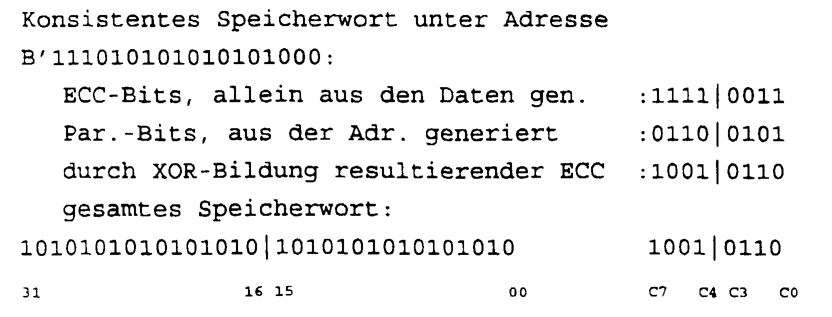

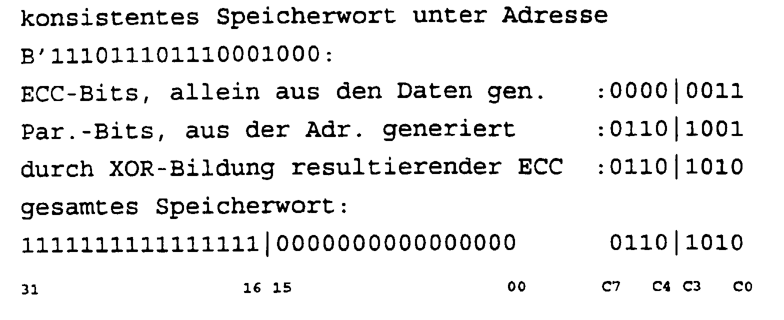

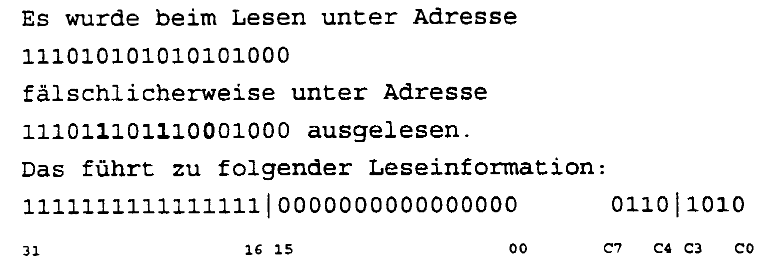

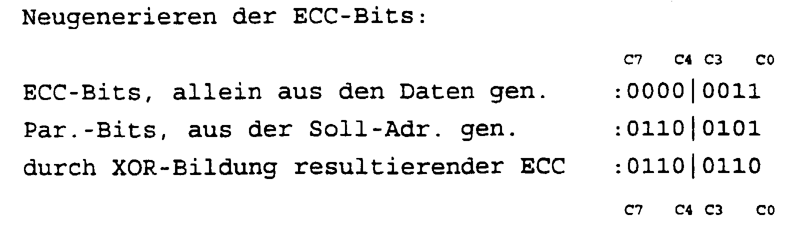

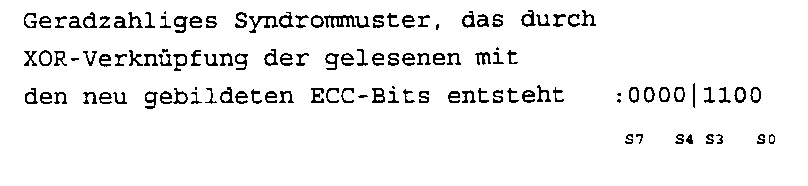

Es führt zur Alarmierung eines Mehrfachfehlers

## Patentansprüche

1. Speichersystem,
in dem zusammen mit einem Datenwort jeweils ein Kontrollwort mit abgespeichert wird,
mit einem Fehlerüberwachungssystem, das
a) das genannte Kontrollwort gemäß einem bestimmten Bildungsgesetz, dem sogenannten EDC-Code, mittels einer Codiereinrichutng aus dem einzuschreibenden Datenwort und der Schreibadresse erzeugt, bevor das Kontrollwort gemeinsam mit dem einzuschreibenden Datenwort unter der genannten SchreibAdresse abgespeichert wird, und das
b) anhand eines aus dem Speichersystem auszulesenden Datenwortes gemäß dem EDC-Code mittels einer Codiereinrichtung erneut ein Kontrollwort erzeugt, die Bits des Kontrollworts, K-Bits, mit den zum Datenwort abgespeicherten K-Bits vergleicht und bei Ungleichheit aus dem Muster der gleichen und ungleichen K-Bits, dem sog. Syndrommuster, auf die Art des Fehlers schließt,
**gekennzeichnet durch**
eine Zeitmultiplexeinrichtung zum Multiplex vom einzuschreibenden Datenwort und von dessen Schreibadresse dient Wasermöglicht, daß die Erzeugung des Kontrollworts aus Schreibadresse und einzuschreibendem Datenwort von ein und derselben Codiereinrichtung durchgeführt wird.

## Claims

1. Memory system,
in which a respective check word is stored together with a data word,
having an error monitoring system, which
a) generates the said check word in accordance with a specific formation law, the so-called EDC code, by means of an encoding device from the data word to be written in and the write address, before the check word is stored together with the data word to be written in under the said write address, and which
b) generates anew a check word using a data word, to be read from the memory system, in accordance with the EDC code by means of an encoding device, compares the bits of the check word, C bits, with the C bits stored in relation to the data word and, in the absence of identity, draws a conclusion about the type of error from the pattern of identical and non-identical C bits, the so-called syndrome pattern,
characterized by
a time-division multiplex device serving to multiplex the data word to be written in and the write address of the said data word, which enables the generation of the check word from the write address and the data word to be written in to be carried out by one and the same encoding device.

## Revendications

1. Système de mémoire,
dans lequel un mot de contrôle est mémorisé chaque fois conjointement avec un mot de données,
qui comporte un système de surveillance d'erreurs qui,
a) produit ledit mot de contrôle suivant une loi de formation déterminée, ce que l'on appelle le code EDC, au moyen d'un dispositif de codage, à partir du mot de données à écrire et de l'adresse d'écriture, avant que le mot de contrôle ne soit mémorisé à ladite adresse d'écriture conjointement avec le mot de données à écrire, et qui
b) à l'aide d'un mot de données à lire dans le système de mémoire, produit suivant le code EDC, au moyen d'un dispositif de codage, à nouveau un mot de contrôle, compare les bits du mot de contrôle, bits K, aux bits K mémorisés par rapport au mot de données et, en cas d'inégalité, déduit du modèle des bits K égaux et inégaux, ce que l'on appelle le modèle de syndrome, le genre de l'erreur,
caractérisé par un dispositif de multiplexage dans le temps pour le multiplexage du mot de données à écrire et de son adresse d'écriture, ce qui permet que la production du mot de contrôle à partir de l'adresse d'écriture et du mot de données à écrire soit effectuée par un seul et même dispositif de codage.
